# EUROPEAN PATENT SPECIFICATION

(11) **EP 1 500 673 B1**
(45) Date of publication and mention of the grant of the patent: **24.05.2006**
(21) Application number: 03746774.3
(22) Date of filing: 11.04.2003
(51) Int. Cl.: C08J 3/20, C08J 11/06

(54) **METHOD FOR REUSING CRUSHED SYNTHETIC RESIN PRODUCT HAVING CURED RESIN INCORPORATED THEREIN**
VERFAHREN ZUR WIEDERVERWENDUNG VON ZERKLEINERTEM KUNSTHARZPRODUKT MIT DARIN EINGEARBEITETEM GEHÄRTETEM HARZ
PROCEDE DE REUTILISATION D'UN PRODUIT DE RESINE SYNTHETIQUE CONCASSE DANS LEQUEL EST INCORPOREE UNE RESINE POLYMERISEE

(30) Priority: 19.04.2002 JP 2002118431; 27.06.2002 JP 2002188254
(43) Date of publication of application: 26.01.2005
(73) Proprietor: Ube Industries, Ltd., Ube-shi, Yamaguchi-ken 755-8633 (JP)
(72) Inventor: SUZUKI, Yoshiki c/o Tokyo Head Office Ube Ind. Ltd, Minato-ku, Tokyo 105-844 9 (JP); AKO, Tatsushi c/o Sakai Factory Ube Ind. Ltd., Sakai-shi, Osaka 592 -8543 (JP); TANAKA, Yukimasa c/o Sakai Factory Ube Ind. Ltd., Sakai-shi, Osaka 592-8543 (JP); HINENOYA, Saburou c/o Sakai Factory Ube Ind. Ltd., Sakai-shi, Osaka 592-8543 (JP); KITA, Yasuo c/o Sakai Factory Ube Ind. Ltd., Sakai-shi, Osaka 592-8 543 (JP)
(74) Representative: Albrecht, Thomas
(86) International application number: PCT/JP2003/004650
(87) International publication number: WO 2003/089500

(56) References cited:
- DE-A1- 4 311 138
- JP-A- 2000 327 896
- US-A- 4 968 463
- US-A- 5 468 779
- PATENT ABSTRACTS OF JAPAN vol. 013, no. 442 (C-641), 3 October 1989 (1989-10-03) & JP 01 168737 A (KAZUO AKIYAMA; others: 01), 4 July 1989 (1989-07-04)
- DATABASE WPI Week 200114 Derwent Publications Ltd., London, GB; AN 1995-307879 XP002323972 5: & JP 07 205146 A (UBE IND LTD) 8 August 1995 (1995-08-08)

## Description

### [Field of Invention]

The present invention relates to a method for reclaiming a synthetic resin product that is colored with a black or colored pigment and has a skin trim on its surface. In more detail, the invention relates to a technology for converting a pulverized synthetic resin product that is colored with a black or colored pigment and has a skin trim on its surface, which is obtainable, for instance, from parts of automobile or parts of household electric appliances.

### [Prior Art]

Recently, it is desired to reclaim or recycle synthetic resin products represented by parts of automobile or parts of household electric appliances so as to obviate environmental disruption. Accordingly, many industrial companies have studied methods for efficiently reclaiming these synthetic resin products. Since most of synthetic resin products comprise a thermoplastic resin, most known method for reclaiming synthetic resin products comprises the steps of pulverizing the synthetic product to prepare a pulverized product, heating the pulverized product to give a molten product, and converting the molten product into solid particles.

The synthetic resin products mentioned above are generally named waste plastic materials. Most of the waste plastic materials are colored with a black pigment to show a black or gray surface, or with colored pigments such as a red pigment, a blue pigment and a yellow pigment to show a colored surface. In most cases, the colored products have various colorings or patterned or partial coloring. In some cases, coloring of the colored synthetic resin products used for a certain period is faded and varies from the original coloring. Accordingly, when the pulverized synthetic resin product is melted and converted into reclaimed resin particles, the resulting resin particles necessarily show black or gray surfaces. Therefore, thus produced resin material having black or gray surface can be re-used only for manufacturing black or gray resin articles.

In addition, bumpers of automobiles and most of interior trims of automobiles have a skin film (skin layer or coated film) of cured resin. If the resin product having such skin film of cured resin is pulverized without removing the skin film, melted, and converted into a reclaimed resin article, the resulting resin article shows spots of the skin film (of cured resin) on its surface. The spots on the resin article lower value of the article made of reclaimed resin. For this reason, according to the conventional methods, the skin film (of cured resin) is generally removed before the synthetic resin product is pulverized.

### [Disclosure of Invention]

The inventors of the present invention have discovered that a pulverized thermoplastic resin product containing a small amount of a cured resin and a black or colored pigment can be converted into resin particles by utilizing a method of mixing the pulverized thermoplastic resin product with a light-shielding pigment such as a white pigment, a black pigment or a colored pigment, melting the mixture, and converting the molten mixture into solid particles. The resulting resin particles are favorably employable for manufacturing resin articles having good appearance.

Accordingly, the present invention resides in a method for producing reclaimed resin particles which comprises the steps of: preparing a molten product which comprises a mixture of a light-shielding pigment and a pulverized thermoplastic resin product to be reclaimed which contains a black pigment or a colored pigment and 0.1 to 10 weight % of a cured resin; and converting the molten product into solid particles.

The step of preparing a molten product involved in the present invention is preferably performed by mixing the pulverized resin product to be reclaimed with the light-shielding pigment and then melting the mixture by heating. However, the step can be carried out by preliminarily heating and melting the synthetic resin product to be reclaimed and then adding the light-shielding pigment to the molten product during the heating procedure or a cooled product after once terminating the procedure of heating the molten product. Subsequently, the resulting mixture is heated and melted. The molten product can be converted into solid particles by producing particles of the molten product and cooling them, or by cooling the molten product as such and then pulverizing the cooled product.

### [Detailed Description of Invention]

Preferred embodiments of the invention are described below.
(1) The light-shielding pigment used in the step of preparing a molten product comprises a colored pigment alone, a mixture of a colored pigment and a black pigment, a mixture of a colored pigment and a white pigment, or a mixture of a colored pigment, a black pigment and a white pigment, and the reclaimed resin product is in the form of colored resin particles.
(2) An inorganic filler is incorporated into the mixture prepared in the step of preparing a molten product.
(3) A thermoplastic resin is incorporated into the mixture prepared in the step of preparing a molten product.
(4) A thermoplastic resin and an elastomer are incorporated into the mixture prepared in the step of preparing a molten product.
(5) The pulverized thermoplastic resin product to be reclaimed is a pulverized bumper or interior trim having a skin film which is taken from an automobile.
(6) The pulverized thermoplastic resin product to be reclaimed comprises a thermoplastic resin selected from the group consisting of polyolefin, polyester, polystyrene, ABS resin, and polyamide.
(7) The pulverized thermoplastic resin product to be reclaimed contains an elastomer.
(8) Reclaimed resin particles produced by the above-mentioned method of the invention.
(9) Reclaimed colored resin particles produced by the above-mentioned method of the invention.
(10) A method for manufacturing a resin article which comprises the steps of melting the reclaimed resin particles of (8) above under heating and molding the molten resin.
(11) A method for producing a resin article which comprises the steps of melting the reclaimed colored resin particles of (9) above under heating and molding the molten resin.

The method of the invention for reclaiming pulverized synthetic resin product is characterized in that a light-shielding pigment, and optionally a thermoplastic resin, an elastomer, and a filler, are added to the pulverized synthetic resin product containing a small amount of cured resin product.

In the method of the invention, 0-99 wt.% of a thermoplastic resin, 0-40 wt.% of an elastomer, and 0-50 wt.% of a filler is added to 1-100 wt.% of the pulverized product (total amount of the pulverized product, polyolefin, elastomer, and/or filler reach 100 wt.%). To 100 weight parts of the pulverized product are added 0.01-20 weight parts, preferably 0.05-15 weight parts, more preferably 0.15-12 weight parts, more preferably 0.2-12 weight parts, most preferably 0.25-10 weight parts, of a light-shielding pigment (one or more of a black pigment, a white pigment, and a colored pigment).

In the invention, the addition of a component selected from a thermoplastic resin, an elastomer, and a filler is preferred, because physical properties such as mechanical performance of a resin article manufactured in the reclaiming method of the invention is improved.

Examples of the pulverized synthetic resin products to be reclaimed in the invention include pulverized resin material wastes produced in resin molding and resin processing, used instrument panels, interior and exterior parts such as bumpers and plastic material parts of used automobiles, used household electric appliances, industrial material parts, and building materials. The method of the invention is preferably employed for reclaiming pulverized resinous parts of used automobiles such as instrument panels, bumpers and plastic material parts, household electric parts, industrial materials, and materials employed for building houses.

The pulverized synthetic resin product to be reclaimed in the invention can be a pulverized resin product waste which is obtained from a mixture of a thermoplastic resin product, a cured resin skin film attached to the resin product (resinous film prepared by curing a resin coat of a curable resin such as acryl resin, urethane resin, unsaturated polyester resin, alkyd-melamine resin, or acryl-melamine resin by the use of heat, light (including ultra-violet rays)), water, a solvent, a curing catalyst, and the like.

Representative examples of synthetic resin products to be claimed include bumpers recovered from automobiles. There are no specific limitation with respect to the recovered bumpers. However, it is preferred that the recovered bumper comprises a crystalline propylene resin, an elastomer, and a pigment. For instance, it is specifically preferred that the recovered bumper comprises 40-90 wt.% of a crystalline propylene resin, 10-60 wt.% of an elastomer, and 0-20 wt.% of other resin materials. The recovered bumper can contain pigments such as carbon black and titanium dioxide. A recovered bumper containing both of carbon black and titanium dioxide is favorably reclaimed according to the invention. The recovered bumper preferably comprises 100 weight parts of plastic components (resinous component + elastomer component), and not more than 2 weight parts, preferably not more than 1.5 weight parts, more preferably not more than 1 weight part, most preferably not more than 0.6 weight part, of carbon black. The recovered bumper preferably contains not more than 1.5 weight parts (based on 100 weight parts of the plastic components), more preferably not more than 1 weight part, more preferably not more than 0.5 weight part, most preferably not more than 0.3 weight part, of a pigment other than carbon black. In addition, the recovered bumper may contain not more than 50 weight parts (based on 100 weight parts of the plastic components), preferably not more than 40 weight parts, more preferably not more than 30 weight parts, most preferably not more than 20 weight parts, of a filler such as talc. The recovered bumper preferably comprises a thermoplastic resin showing a melt flow rate (MFR, measured according to ASTM D1238, at a temperature of 230°C and a weight o 2.16 kg) of 1-100 g/10 min., more preferably 3-70 g/10 min., most preferably 5-50 g/10 min.

The pulverized synthetic resin product generally comprises particles having a diameter of not larger than 30 mm, preferably 1-30 mm, more preferably 1-25 mm, more preferably 1-20 mm, most preferably 1-12 mm. The pulverized synthetic resin product can be melted and molded in a heated extruder to give pellets. These pellets can be utilized in the invention in place of the pulverized product.

The pulverized synthetic resin product containing a black pigment which can be reclaimed in the invention preferably is a black or gray pulverized product showing L* of not higher than 28.00, a* of -1.00 to 0.40, and b* of -1.50 to 0.50. Preferably, the pulverized product shows L* of 20.00 to 37.00, a* of -1.00 to 0.40, and b* of -1.50 to 0.60. More preferably, the pulverized product shows L* of 23.00 to 36.00, a* of -0.70 to 0.10, and b* of -1.20 to 0.20. More preferably, the pulverized product shows L* of 23.00 to 33.00, a* of -0.70 to 0.10, and b* of -1.20 to 0.20. Particularly preferably, the pulverized product shows L* of 23.00 to 28.00, a* of -0.70 to 0.10, and b* of -1.20 to 0.20.

Examples of the white pigments employable for incorporation into the pulverized synthetic resin product include titanium dioxide, white lead, and zinc oxide. Most preferred is titanium dioxide.

Any of known titanium dioxide pigments can be employed with no specific limitations. For instance, titanium dioxide prepared by the chlorine method or sulfuric acid method can be employed. Preferred is titanium dioxide prepared by the chlorine method. There are no spe-, cific limitations with respect to the forms of the particles. Titanium dioxide of tetragonal type, rutile type, or anatase type can be employed. Preferred are titanium dioxide of the tetragonal type or rutile type. There is no limitation with respect to mean size of the particles. It is preferred that the mean particle size is within 0.01-0.5 µm, more preferably 0.05-0.5 µm, more preferably 0.1-0.4 µm, and particularly preferably 0.2-0.3 µm, because these particles are satisfactory in dispersability and handling. There is no limitation with respect to DOP absorption of the titanium dioxide. It is preferred that the DOP absorption is within 5-40 cc/100 g, more preferably 8-30 cc/100 g, more preferably 10-20 cc/100 g, and most preferably 12-18 cc/100 g.

Any of known colored pigments can be employed in the invention. Examples include inorganic pigments such as oxides, hydroxides, sulfides, chromates, carbonates, sulfates and silicates of metal; and organic pigments such as azo compounds, diphentylmethane compounds, triphenylmethane compounds, phthalocyanine compounds, nitro compounds, nitroso compounds, anthraquinone compounds, quinacridone red compounds, benzidine compounds, and fused polycyclic compounds. Also employable are colored fibers and metal particles. There is no specific limitation with respect to hue of the colored pigment. Any of yellow pigments, blue pigments, red pigments, and green pigments can be employed. The pigments can be employed in combination of two or more.

Examples of the colored pigments employable in the invention include inorganic pigments such as iron oxide red, cadmium red, cadmium yellow, ultramarine blue, cobalt blue, titanium yellow, red lead, yellow lead, prussian blue, zinc sulfide, chromium yellow, barium yellow, cobalt blue, and cobalt green; organic pigments such as quinacridone red, polyazo yellow, anthraquinone red, anthraquinone yellow, polyazo red, azo lake yellow, perylene, phthalocyanine blue, phthalocyanine green, isoindolinone yellow, watchung red, permanent red, para red, toluidine maroon, benzidine yellow, fast sky blue, and brilliant carmine 6B; colored fibers, and glossy metal particles. The pigments can be employed in combination of two or more.

There is no specific limitation with respect to mean size of the titanium yellow. It is preferred that the mean size is within 0.1-1.5 µm, more preferably 0.5-1.3 µm, more preferably 0.7-1.1 µm, and most preferably 0.8-1 µm, because they are satisfactory in dispersability and handling. There is no specific limitation with respect to DOP absorption of the titanium yellow. It is preferred that the DOP absorption is within 15-40 cc/100 g, more preferably 20-35 cc/100 g, and most preferably 20-30 cc/100 g. There is no specific limitation with respect to pH of the titanium yellow. Preferred is pH 6-10, and pH 7-9 is most preferred.

There is no specific limitation with respect to mean size of the ultramarine blue. It is preferred that the mean size is within 0.1-5 µm, more preferably 0.5-4 µm, more preferably 0.8-3.5 µm, and most preferably 1-3 µm, because they are satisfactory in dispersability and handling. There is no specific limitation with respect to DOP absorption of the ultramarine blue. It is preferred that the DOP absorption is within 20-50 cc/100 g, more preferably 25-40 cc/100 g, and most preferably 30-35 cc/100 g. There is no specific limitation with respect to pH of the ultramarine blue. Preferred is pH 5-11. pH 5.5-11 is more preferred, and pH 7-11 is most preferred.

As for the phthalocyanine blue, any of known phthalocyanine blue pigments can be employed. For instance, those produced by the Waller process or the phthalonitrile process can be employed. There is no specific limitation with respect to form of the phthalocyanine blue. Phthalocyanine blue pigments of α-type and β-type can be employed. There is no specific limitation with respect to mean size of the phthalocyanine blue. It is preferred that the mean size is within 0.01-2 µm, more preferably 0.05-1.5 µm, more preferably 0.1-0.4 µm, and most preferably 0.1-1 µm.

As for the phthalocyanine green, any of known phthalocyanine green pigments can be employed. For instance, those produced by the Waller process or the phthalonitrile process can be employed. There is no specific limitation with respect to form of the phthalocyanine green. Phthalocyanine green pigments of α-type and β-type can be employed. There is no specific limitation with respect to mean size of the phthalocyanine green. It is preferred that the mean size is within 0.01-2 µm, more preferably 0.05-1.5 µm, more preferably 0.1-0.4 µm, and most preferably 0.1-1 µm. There is no specific limitation with respect to pH of the phthalocyanine green. Preferred is pH 4-9, and pH 4-8 is more preferred.

As for the iron oxide red, any of known iron oxide red pigments can be employed. There is no specific limitation with respect to form of the iron oxide red. Iron oxide red pigments of isometric system can be employed. There is no specific limitation with respect to mean size of the iron oxide red. It is preferred that the mean size is within 0.01-1 µm, more preferably 0.05-0.5 µm, more preferably 0.08-0.4 µm, most preferably 0.1-0.3 µm. There is no specific limitation with respect to DOP absorption of the iron oxide red. It is preferred that the DOP absorption is within 10-50 cc/100 g, more preferably 12-40 cc/100 g, and most preferably 15-30 cc/100 g. There is no specific limitation with respect to pH of the iron oxide red. Preferred is pH 4-8, and pH 5-7 is more preferred.

As for the quinacridone red, any of known quinacridone red pigments can be employed. There is no specific limitation with respect to form of the quinacridone red. Quinacridone red pigments of α-type, β-type and γ-types can be employed. There is no specific limitation with respect to mean size of the quinacridone red. It is preferred that the mean size is within 0.01-2 µm, more preferably 0.05-1.5 µm, and most preferably 0.1-1 µm.

As for the anthraquinone red, any of known anthraquinone red pigments can be employed. There is no specific limitation with respect to form of the anthraquinone red. There is no specific limitation with respect to mean size of the anthraquinone red. It is preferred that the mean size is within 0.01-2 µm, more preferably 0.05-1.5 µm, and most preferably 0.1-1 µm. There is no specific limitation with respect to pH of the anthraquinone red. Preferred is pH 4-9.

A black pigment such as carbon black or iron black can be optionally added to the pulverized resin product. The black pigment can impart a high light-insulating property to the reclaimed resin articles. The black pigments can be employed in combination of two or more.

As for the carbon black, any of known carbon black pigments can be employed without no specific limitations. For instance, carbon black, acetylene black, lamp black, channel black, or ketchen black produced by the furnace process or channel process can be employed. The carbon black can be subjected to oxidation processing. Preferred is a furnace black produced by the furnace process, because it has good uniform appearance, good dispersability, and blackness and increased gloss of the resulting molded article. There is no specific limitation with respect to mean size of the carbon black. It is preferred that the mean size is within 0.001-0.3 µm, more preferably 0.005-0.2 µm, more preferably 0.01-0.1 µm, and most preferably 0.01-0.03 µm, because a carbon black of such mean size is excellent in dispersability and handling, and moreover provides high blackness and high glossiness.

The iron black can be a black iron oxide produced by the firing method. There is no specific limitation with respect to the form of the iron black. Iron black having a polyhedral form such as an octahedral form or a globular form can be used. Preferred is an octahedral iron black. There is no specific limitation with respect to mean size of the iron black. It is preferred that the mean size is within 0.05-0.4 µm, more preferably 0.15-0.35 µm, and most preferably 0.2-0.35 µm. There is no specific limitation with respect to DOP absorption of the iron black. It is preferred that the DOP absorption is within 10-80 cc/100 g, more preferably 15-50 cc/100 g, more preferably 20-40 cc/100 g, and most preferably 25-30 cc/100 g. There is no specific limitation with respect to pH of the iron black. Preferred is pH 9-11, and pH 9-10 is more preferred.

The white pigment, black pigment, and/or colored pigment can be added directly, or in the form of a master batch. Technology of master batch utilizing a pigment and a resin component is already known.

A filler can be optionally added to the pulverized resin product, and the addition of a filler is preferred for improving physical properties of the resulting reclaimed resin articles. The fillers can be employed in combination of two or more.

The filler can be organic fillers or inorganic fillers other than the pigments. Examples of the inorganic fillers include talc, clay, mica, silica, diatomaceous earth, magnesium aluminate, montmorillonite, bentonite, dolomite, dosonite, silicates, carbon fibers, glasses (including glass fibers), barium ferrite, beryllium oxide, aluminum hydroxide, magnesium hydroxide, basic magnesium carbonate, calcium carbonate, magnesium carbonate, magnesium sulfate, calcium sulfate, barium sulfate, ammonium sulfate, calcium sulfite, calcium silicate, molybdenum sulfite, zinc borate, barium methaborate, calcium borate, sodium borate, metals such as zinc, copper, iron, lead, aluminum, nickel, chromium, titanium, manganese, tin, platinum, tungsten, gold, magnesium, cobalt, and strontium, oxides of these metals, stainless steel, solder, metal alloy such as brass, powders of metallic ceramics such as silicon carbide, silicon nitride, zirconia, aluminum nitride, titanium carbide, whiskers, and fibers. The fibers and whiskers preferably have L/D of not lower than 10, more preferably not lower than 15. The fibers preferably has a length of 0.1 to 5 mm, more preferably 1 to 5 mm. The width of the fiber preferably is not more than 30 µm, more preferably 1-30 µm, most preferably 1-15 µm. Particularly, the carbon fiber preferably has a length of 0.1 to 5 mm, more preferably 1 to 5 mm, and a width of not more than 30 µm, more preferably 1-30 µm, and most preferably 1-15 µm.

As the filler, an inorganic filler is preferred, and talc is most preferred.

In the method of reclaiming the synthetic resin product, additives and dispersants such as lubricants, anti-static agents, surfactants, nucleating agents, ultra-violet ray absorbers, oxidation inhibitors, and flame retardants can be employed.

Examples of the dispersants include higher fatty acids, higher fatty acidamide, metal soaps, glycerol esters, hydrotalcite, polyethylene wax, and polypropylene wax.

Examples of the additives include oxidation inhibitors of phenol type, phosphorus type, and sulfur type, benzophenone, benzotriazole, ultraviolet ray absorbers such as HALS, and flame retardants of phosphorus type and halogen types.

As described before, a thermoplastic resin and/or an elastomer can be employed in the method of the invention for reclaiming the pulverized synthetic resin product. The thermoplastic resin and elastomer to be employed preferably is the same as or an equivalent to those contained in the resin product.

Accordingly, examples of the thermoplastic resin materials employable in the method of reclaiming the pulverized resin product are olefinic resins (e.g., high density polyethylene, low density polyethylene, crystalline polypropylene), polycarbonate resins, polyurethane resins, styrene resins, ABS resins (acrylonitrile-butadiene-styrene resins), polyester resins such as polybutylene terephthalate and polyethylene terephthalate, polyphenyl ether resins such as modified polyphenylene ether and polyphenylene sulfide, polyacryl resins such as poly(methyl methacrylate), polyamides such as 6-nylon, 66-nylon, 12-nylon, and 6,12-nylon, and polysulfones.

In the method of the invention for producing particles of reclaimed resin material, the pulverized synthetic resin product containing cured resin material is mixed with an appropriate amount of a light-shielding pigment such as a colored pigment, a white pigment, or a black pigment, or a mixture thereof, and optionally, with a thermoplastic resin and an elastomer, and subsequently the resulting mixture is melted and kneaded. Thereafter, the kneaded material is processed to obtain specimen directly or via reclaimed resin particles. The obtained specimen is subjected to visual observation or observation using a testing apparatus for examining color hue or appearance (particularly, appearance concerning spots of cured resin pieces). If desired, certain physical properties are measured to examine whether the natures and amounts of the employed additives are appropriate or not. Based on the examination, the preparation of specimen of reclaimed resin product is repeated with varying the natures and amounts of the additives to obtain the desired reclaimed resin product.

Specifically, the production of colored reclaimed resin particles according to the invention can be carried out by the following procedures. The pulverized resin product to be claimed is mixed with an approximately appropriate amount of a colored pigment, a combination of a white pigment and a colored pigment, or a combination of a white pigment, a black pigment and a colored pigment, and if desired, a thermoplastic resin and an elastomer. The mixture is then melted and kneaded. Thereafter, the kneaded material is processed to obtain specimen directly or via reclaimed resin particles. The obtained specimen is subjected to visual observation or observation using a testing apparatus for examining color hue or appearance (particularly, appearance concerning spots of cured resin pieces). If desired, certain physical properties are measured to examine whether the natures and amounts of the employed additives are appropriate or not. Based on the examination, the preparation of specimen of reclaimed resin product is repeated with varying the natures and amounts of the additives to obtain the reclaimed resin product having the desired color hue and physical properties.

There are no specific limitations with respect to the procedures and apparatuses for mixing the pulverized resin product and additives. Mixers and/or kneaders such as known single worm extruders (or kneaders), dual worm extruders (or kneader), tandem kneading apparatuses comprising a dual worm extruder and a single worm extruder (or kneader) combined in series, calenders, banbury mixers, kneading rolls, brabender plastgraphs, or kneaders can be employed.

The colored reclaimed resin particles can be processed by known molding procedures such as extrusion molding, sheet formation molding, injection molding, injection-compression molding, gas injection molding, blow molding, or vacuum molding, to give reclaimed articles such as interior or exterior parts of automobiles such as bumpers, plastic material parts, door trims, instrument panel, trims, console boxes, parts of engine room of automobiles such as batteries and fan shrouds, interior or exterior parts of household electric appliances, interior or exterior parts of house, or articles employable as buffer materials or packing materials. According to the method of the invention for reclaiming plastic materials can give molded articles having a glossy surface, embossed articles, articles having color patterns, and articles having a smoothly embossed pattern.

Examples embodying the invention are given hereinbelow. In the examples, the lightness and hue of the molded articles (specimen) are measured by the following procedures.

### [Procedures for measurement]

(1) The embossed surface of the specimen is subjected to measurements of "Lightness L*", "Hue a*" and "Hue b*" (CIE 1976), by means of a spectrophotometer (light source: D-65, viewing angle: 10°) available from Kurashiki Spinning Co., Ltd.
(2) Evaluation of appearance of embossed surface of specimen
   1) Visual observation
      The embossed surface of the specimen is viewed and marked according to the following criteria:
      AA: No cured resin film spot is noted.
      BB: Almost no cured resin film spot is noted.
      CC: Cured resin film spots are apparently noted.
   2) Microscopic observation
      The embossed surface (10 x 10 cm) of the specimen is examined by microscopic observation using reflection differential interference contract microscope (magnifications: 40) available from Nikon Co., Ltd., and marked according to the following three criteria:
      3: Size of cured resin film is less than 120 µm.
      2: Size of cured resin film is between 120 µm and 200 µm.
      1: Size of cured resin film is more than 200 µm.

### [Examples 1 to 24]

### (1) Synthetic resin product to be reclaimed

A bumper product having been recovered from a used automobile (colored with black pigment, having a coating film) and pulverized to give chips of 5-10 mm was employed as a waste plastic material.

The pulverized bumper had a melt flow rate (MFR) of 28.6 g/10 min. (measured according to ASTM D1238, at a temperature of 230°C and a weight of 2.16 kg) and comprised approx. 60 weight parts of crystalline polypropylene, approx. 30 weight parts of elastomers (a mixture of EPR and other elastomers), approx. 10 weight parts of talc, approx. 2-4 weight parts of a coating film (a mixture of urethane resin and melamine resin, a mixture of chips of white, silver, red-silver, green-silver, gold, light blue, and dark blue), and approx. 0.5-1 weight part of a pigment mixture containing carbon black, titanium dioxide, and other pigments.

### (2) Additive materials

1) Polypropylene: crystalline polypropylene (homo, melt flow rate (MFR): 30 g/10 min., pendant ratio: 96.0%)
2) Elastomer: ethylene-propylene copolymer (Mooney viscosity: ML₁₊₄(100°C): 35, ethylene content: 72 wt.%)
3) Talc having a mean diameter of 2.7 µm (laser diffraction method)
4) Iron oxide black having a mean diameter of 0.27 µm, a DOP absorption of 26-30 cc/100 g, and pH 9-10
5) Carbon black having a mean diameter of 0.017 µm (prepared by furnace process)
6) Titanium dioxide having a mean diameter of 0.22 µm, a DOP absorption of 14 cc/100 g, and pH 5.5-7.5
7) Titanium yellow having a mean diameter of 0.91 µm, a DOP absorption of 25 cc/100 g, and pH 7.8
8) Ultramarine blue A having a mean diameter of 1-3 µm, a DOP absorption of 31-33 cc/100 g, and pH 8.5-10.5
9) Phthalocyanine blue belonging to α-type
10) Phthalocyanine green belonging to α-type and having a DOP absorption of 39.3 cc/100 g and pH 7
11) Iron oxide red having a mean diameter of 0.16 µm, a DOP absorption of 23 cc/100 g, and pH 5-7
12) Quinacridone red belonging to β-type and having pH 8.5-9.5
13) Anthraquinone red having a DOP absorption of 54 cc/100 g and pH 5.5-8.5
14) Isoindolinone yellow having a DOP absorption of 34 cc/100 g and pH 7
15) Oxidation inhibitor: IRGANOX 1010 (0.05 weight part) and IRGAFOS 168 (0.05 weight part) were employed in all examples.
16) HALS additive: Sanol LS770 (0.2 weight part) was employed in all examples.
17) Dispersant: calcium stearate (0.1 weight part) was employed in all examples.
18) In Examples 1-22, the additives were blended in a tumbler mixer (available from Platech Co., Ltd.) under dry condition and kneaded in a twin screw extruder (UME 40-48T, available from Ube Industries, Ltd.) under the conditions of L/D=47.7, barrel temperature: 200°C, 20 mesh screen pack, and processing rate: 60 kg/hr., to give pellets.

In each example, the total amount of the waste plastic material, polypropylene, elastomer and talk was set to 100 weight parts (waste plastic material: 77 wt.%, polypropylene: 15 wt.%, elastomer: 3 wt.%, talc: 5 wt.%).

The pellets were placed in an injection molding machine (metal mold: square plate (100 mm x 100 mm x 3 mm, embossing or graining) under the following conditions, to give specimen:
molding temperature: 180°C, 190°C, 200°C, 210°C
molding pressure: P1-P2-P3-P4=108-98-88-78 (MPa)
molding rate: V1-V2-V3-V4=30-30-20-20 (%)
screw back pressure: free
screw rotation: 60%
mold temperature: 40°C
cycle: injection: 10 sec., and cooling: 20 sec.
shot conditions: continuous 10 shots, specimen of 6th to 10th shots were employed for the measurements.

The specimen were prepared in the same manner in Examples 23 and 24, except that the following materials were employed:
Example 23: 59 wt.% of waste plastic material, 40 wt.% of polypropylene, and 0 wt.% of elastomer
Example 24: 30 wt.% of waste plastic material, 63 wt.% of polypropylene, and 0 wt.% of elastomer.

The molded products (specimen) were subjected to measurements of lightness and hue. In Table 1, the additive (amount in terms of weight part) and the results of evaluation are shown.

**Table 1**

| Specimen prepared from waste plastic material |
|---|
| L*: 25.74, a*: -0.21, b*: -0.60 |
| Hue of waste plastic material (visual observation): black |
| Evaluation of embossed surface: CC (visual observation), 1 (microscopic observation) |

| Example 1: Pigment (carbon black, 0.1) |
|---|
| Reclaimed resin: L*: 24.61, a*: -0.09, b*: -0.42 Hue of waste plastic material (visual observation): black |
| Evaluation of embossed surface: BB (visual observation), 2 (microscopic observation) |

| Example 2: Pigment (carbon black, 0.5) |
|---|
| Reclaimed resin: L*: 24.07, a*: -0.10, b*: -0.67 Hue of reclaimed resin (visual observation): black Evaluation of embossed surface: AA (visual observation), 3 (microscopic observation) |

| Example 3: Pigment (iron black, 1.0) |
|---|
| Reclaimed resin: L*: 25.08, a*: -0.05, b*: -0.34 Hue of reclaimed resin (visual observation): black Evaluation of embossed surface: BB (visual observation), 2 (microscopic observation) |

| Example 4: Pigment (titanium yellow, 1.0) |
|---|
| Reclaimed resin: L*: 29.50, a*: -0.18, b*: 3.65 Hue of reclaimed resin (visual observation): yellowish dark gray |
| Evaluation of embossed surface: BB (visual observation), 2 (microscopic observation) |

| Example 5: Pigment (titanium dioxide, 1.0) |
|---|
| Reclaimed resin: L*: 35.20, a*: 0.00, b*: -2.17 Hue of reclaimed resin (visual observation): bluish medium gray |
| Evaluation of embossed surface: BB (visual observation), 2 (microscopic observation) |

| Example 6: Pigment (titanium dioxide, 2.0) |
|---|
| Reclaimed resin: L*: 39.31, a*: -0.38, b*: -2.50 Hue of reclaimed resin (visual observation): bluish medium gray |
| Evaluation of embossed surface: AA (visual observation), 3 (microscopic observation) |

| Example 7: Pigment (phthalocyanine blue, 1.0) |
|---|
| Reclaimed resin: L*: 23.40, a*: -0.95, b*: -4.23 Hue of reclaimed resin (visual observation): bluish black |
| Evaluation of embossed surface: AA (visual observation), 3 (microscopic observation) |

| Example 8: Pigment (quinacridone red, 1.0) |
|---|
| Reclaimed resin: L*: 24.43, a*: 5.09, b*: -2.01 Hue of reclaimed resin (visual observation): purplish reddish black |
| Evaluation of embossed surface: AA (visual observation), 3 (microscopic observation) |

| Example 9: Pigment [carbon black (0.3), phthalocyanine blue (0.18), quinacridone red (0.15)] |
|---|
| Reclaimed resin: L*: 23.93, a*: 0.09, b*: -0.89 Hue of reclaimed resin (visual observation): black Evaluation of embossed surface: AA (visual observation), 3 (microscopic observation) |

| Example 10: Pigment [carbon black (0.45), phthalocyanine blue (0.28), quinacridone red (0.05)] |
|---|
| Reclaimed resin: L*: 23.53, a*: -0.17, b*: -0.19 Hue of reclaimed resin (visual observation): black Evaluation of embossed surface: AA (visual observation), 3 (microscopic observation) |

| Example 11: Pigment [carbon black (0.2), titanium dioxide (0.77), titanium yellow (0.14), phthalocyanine green (0.01)] |
|---|
| Reclaimed resin: L*: 29.09, a*: -0.09, b*: -1.43 Hue of reclaimed resin (visual observation): bluish dark gray |
| Evaluation of embossed surface: AA (visual observation), 3 (microscopic observation) |

| Example 12: Pigment [carbon black (0.05), titanium dioxide (5.6), ultramarine blue A (0.2), iron oxide red (0.04)] |
|---|
| Reclaimed resin: L*: 49.52, a*: -0.39, b*: -2.60 Hue of reclaimed resin (visual observation): |
| bluish light gray |
| Evaluation of embossed surface: AA (visual observation), 3 (microscopic observation) |

| Example 13: Pigment [titanium dioxide (3.05), titanium yellow (0.72), iron oxide red (0.116)] |
|---|
| Reclaimed resin: L*: 51.19, a*: 1.25, b*: 2.43 Hue of reclaimed resin (visual observation): reddish yellowish medium gray |
| Evaluation of embossed surface: AA (visual observation), 3 (microscopic observation) |

| Example 14: Pigment [carbon black (0.08), titanium dioxide (1.3), titanium yellow (0.70), phthalocyanine blue (0.19), quinacridone red (0.07)] |
|---|
| Reclaimed resin: L*: 31.42, a*: -1.37, b*: -5.06 Hue of reclaimed resin (visual observation): dark purplish blue |
| Evaluation of embossed surface: AA (visual observation), 3 (microscopic observation) |

| Example 15: Pigment [titanium dioxide (0.48), phthalocyanine blue (0.3), quinacridone red (0.12)] |
|---|
| Reclaimed resin: L*: 27.44, a*: -0.90, b*: -4.33 Hue of reclaimed resin (visual observation): deep blue |
| Evaluation of embossed surface: AA (visual observation), 3 (microscopic observation) |

| Example 16: Pigment [carbon black (0.1), titanium dioxide (1.95), phthalocyanine blue (0.045), phthalocyanine green (0.165)] |
|---|
| Reclaimed resin: L*: 34.85, a*: -2.88, b*: -3.52 Hue of reclaimed resin (visual observation): grayish blue green |
| Evaluation of embossed surface: AA (visual observation), 3 (microscopic observation) |

| Example 17: Pigment [carbon black (0.08), titanium dioxide (1.45), titanium yellow (0.15), iron oxide red (0.43)] |
|---|
| Reclaimed resin: L*: 34.39, a*: 2.38, b*: 0.17 Hue of reclaimed resin (visual observation): grayish red |
| Evaluation of embossed surface: AA (visual observation), 3 (microscopic observation) |

| Example 18: Pigment [carbon black (0.1), iron oxide red (0.7), anthraquinone red (0.6), isoindolinone yellow (0.15)] |
|---|
| Reclaimed resin: L*: 26.74, a*: 5.90, b*: 3.27 Hue of reclaimed resin (visual observation): dark yellowish red |
| Evaluation of embossed surface: AA (visual observation), 3 (microscopic observation) |

| Example 19: Pigment [carbon black (0.04), titanium dioxide (0.65), titanium yellow (0.85), iron oxide red (0.25)] |
|---|
| Reclaimed resin: L*: 36.23, a*: 2.66, b*: 4.54 Hue of reclaimed resin (visual observation): dull reddish yellow |
| Evaluation of embossed surface: AA (visual observation), 3 (microscopic observation) |

| Example 20: Pigment [titanium dioxide (0.49), titanium yellow (0.32), iron oxide red (0.09)] |
|---|
| Reclaimed resin: L*: 31.07, a*: 0.76, b*: 0.69 Hue of reclaimed resin (visual observation): dark grayish violet |
| Evaluation of embossed surface: BB (visual observation), 2 (microscopic observation) |

| Example 21: Pigment [titanium dioxide (2.4), titanium yellow (1.13), iron oxide red (0.06)] |
|---|
| Reclaimed resin: L*: 61.03, a*: 1.82, b*: 10.29 Hue of reclaimed resin (visual observation): reddish yellowish pale gray |
| Evaluation of embossed surface: AA (visual observation), 3 (microscopic observation) |

| Example 22: Pigment [carbon black (0.06), titanium dioxide (1.16), phthalocyanine blue (0.04), phthalocyanine green (0.098)] |
|---|
| Reclaimed resin: L*: 35.74, a*: -3.78, b*: -4.24 Hue of reclaimed resin (visual observation): dull greenish blue |
| Evaluation of embossed surface: AA (visual observation), 3 (microscopic observation) |

| Example 23: Pigment [carbon black (0.1), titanium dioxide (1.3), titanium yellow (0.9), iron oxide red (0.01)] |
|---|
| Reclaimed resin: L*: 34.56, a*: -0.26, b*: 0.66 Hue of reclaimed resin (visual observation): grayish green |
| Evaluation of embossed surface: AA (visual observation), 3 (microscopic observation) |

| Example 24: Pigment [titanium dioxide (2.35), titanium yellow (0.7), phthalocyanine green (0.045)] |
|---|
| Reclaimed resin: L*: 50.09, a*: -3.17, b*: 1.23 Hue of reclaimed resin (visual observation): light green |
| Evaluation of embossed surface: AA (visual observation), 3 (microscopic observation) |

### [Example 25]

Forty weight parts of waste plastics comprising polypropylene as main ingredients were mixed with 54 weight parts of polypropylene, 6 weight parts of talc, 0.40 weight part of carbon black, 0.22 weight part of phthalocyanine blue, and 0.08 weight part of quinacridone red. The mixture was melted and converted into pellets.

The pellets were processed in the aforementioned manner to prepare specimen. The specimen were measured in its appearance and physical values. The results are set forth in Table 2.

### [Example 26]

Forty weight parts of waste plastics comprising polypropylene as main ingredients were mixed with 54 weight parts of polypropylene, 6 weight parts of talc, 3.30 weight parts of titanium dioxide, 0.01 weight part of iron oxide red, and 0.07 weight part of ultramarine blue. The mixture was melted and converted into pellets.

The pellets were processed in the aforementioned manner to prepare specimen. The specimen were measured in its appearance and physical values. The results are set forth in Table 2.

**Table 2**

| | Waste plastic material | Example 25 | Example 26 |
|---|---|---|---|
| Hue of specimen | black | black | colored |
| Embossed surface (visual observation) | CC | AA | AA |
| Embossed surface | 1 | 3 | 3 |
| (microscopic observation) | | | |
| Lightness (L*) | 25.74 | 23.83 | 49.15 |
| Hue (a*) | -0.21 | -0.17 | -0.52 |
| Hue (b*) | -0.60 | -0.21 | -2.72 |
| Melt flow rate (ASTM D1238, g/10 min.) | 9.2 | 25 | 25 |
| Specific gravity (ASTM D792) | 0.96 | 0.97 | 0.97 |
| Tensile yield strength (ASTM D638, MPa) | 17 | 28 | 28 |
| Tensile elongation at break (ASTM D638, %) | >300 | 40 | 40 |
| Flexural modulus (ASTM D790, MPa) | 1,150 | 2,250 | 2,250 |
| Surface hardness (ASTM D785, Rockwell-R) | 37 | 91 | 91 |
| Izod impact strength (23°C, ASTM D256, J/m) | 378 | 63 | 68 |
| Thermal deformation (0.45 MPa, ASTM D648, °C) | 101 | 129 | 132 |

### [Utilization in Industry]

According to the present invention, waste plastic products having a skin film can be reclaimed without removing the skin film.

The method of the invention for reclaiming waste plastic material enables to produce reclaimed resin products which have good appearance. The resin particles prepared by the method of the invention is particularly favorably employable for manufacturing molded articles by injection molding utilizing a metal mold with an embossed surface.

Further, the method of the invention for reclaiming waste plastic material enable to prepare colored (other than black) resin products by utilizing a colored pigment. For instance, the reclaimed resin product can have a color other than the color of the starting waste plastic material.

## Claims

1. A method for producing reclaimed resin particles which comprises the steps of:
preparing a molten product which comprises a mixture of a light-shielding pigment and a pulverized thermoplastic resin product to be reclaimed which contains 0.1 to 10 weight % of a cured resin and a black pigment or a colored pigment; and
converting the molten product into solid particles.

2. The method for producing reclaimed resin particles as defined in claim 1, wherein the step of preparing a molten product comprises a step of mixing the product to be reclaimed with the light-shielding pigment and a subsequent step of heating and melting the resulting mixture.

3. The method for producing reclaimed resin particles defined in claim 1, wherein the light-shielding pigment used in the step of preparing a molten product comprises a colored pigment alone, a mixture of a colored pigment and a black pigment, a mixture of a colored pigment and a white pigment, or a mixture of a colored pigment, a black pigment and a white pigment, and the pulverized thermoplastic resin product to be reclaimed are colored resin particles.

4. The method for producing reclaimed resin particles defined in claim 1, wherein an inorganic filler is incorporated into the mixture produced in the step of preparing a molten product.

5. The method for producing reclaimed resin particles defined in claim 1, wherein a thermoplastic resin is incorporated into the mixture produced in the step of preparing a molten product.

6. The method for producing reclaimed resin particles defined in claim 1, wherein a thermoplastic resin and an elastomer are incorporated into the mixture produced in the step of preparing a molten product.

7. The method for producing reclaimed resin particles defined in claim 1, wherein the pulverized thermoplastic resin product to be reclaimed is a pulverized bumper or interior trim having a skin film taken from automobile.

8. The method for producing reclaimed resin particles defined in claim 1, wherein the pulverized thermoplastic resin product to be reclaimed comprises a thermoplastic resin selected from the group consisting of polyolefin, polyester, polystyrene, ABS resin, and polyamide.

9. The method for producing reclaimed resin particles defined in claim 1, wherein the pulverized thermoplastic resin product to be reclaimed contains an elastomer.

10. Reclaimed resin particles produced by the method of claim 1.

11. Reclaimed colored resin particles produced by the method of claim 3.

12. A method for manufacturing a resin article prepared by melting the reclaimed resin particles of claim 10 under heating and molding the molten particles.

13. A method for manufacturing a resin article prepared by melting the reclaimed colored resin particles of claim 11 under heating and molding the molten particles.

## Patentansprüche

1. Verfahren zur Herstellung von regenerierten Harzteilchen, umfassend die Stufen:
Herstellung eines geschmolzenen Produkts, umfassend ein Gemisch aus einem lichtabschirmenden Pigment und einem pulverisierten thermoplastischen Harzprodukt, das regeneriert werden soll, das 0,1 bis 10 Gew.-% eines gehärteten Harzes und ein schwarzes Pigment oder ein Farbpigment enthält; und
Umwandlung des geschmolzenen Produkts zu festen Teilchen.

2. Verfahren zur Herstellung von regenerierten Harzteilchen nach Anspruch 1, wobei die Stufe der Herstellung des geschmolzenen Produkts eine Stufe der Vermischung des Produkts, das regeneriert werden soll, mit dem lichtabschirmenden Pigment und eine darauf folgende Stufe des Erhitzens und Schmelzens des resultierenden Gemisches umfasst.

3. Verfahren zur Herstellung von regenerierten Harzteilchen nach Anspruch 1, wobei das in der Stufe der Herstellung des geschmolzenen Produkts verwendete lichtabschirmende Pigment ein Farbpigment allein, ein Gemisch aus einem Farbpigment und einem schwarzen Pigment, ein Gemisch aus einem Farbpigment und einem weißen Pigment oder ein Gemisch aus einem Farbpigment, einem schwarzen Pigment und einem weißen Pigment umfasst, und wobei das pulverisierte thermoplastische Harzprodukt, das regeneriert werden soll, aus gefärbten Harzteilchen besteht.

4. Verfahren zur Herstellung von regenerierten Harzteilchen nach Anspruch 1, wobei ein anorganischer Füllstoff in das Gemisch eingearbeitet wird, das in der Stufe der Herstellung des geschmolzenen Produkts hergestellt worden ist.

5. Verfahren zur Herstellung von regenerierten Harzteilchen nach Anspruch 1, wobei ein thermoplastisches Harz in das Gemisch eingearbeitet wird, das in der Stufe der Herstellung des geschmolzenen Produkts hergestellt worden ist.

6. Verfahren zur Herstellung von regenerierten Harzteilchen nach Anspruch 1, wobei ein thermoplastisches Harz und ein Elastomeres in das Gemisch eingearbeitet werden, das in der Stufe der Herstellung des geschmolzenen Produkts hergestellt worden ist.

7. Verfahren zur Herstellung von regenerierten Harzteilchen nach Anspruch 1, wobei das pulverisierte thermoplastische Harzprodukt, das regeneriert werden soll, eine pulverisierte Stoßstange oder ein dekoratives Innenelement mit einem Hautfilm, genommen von einem Automobil, ist.

8. Verfahren zur Herstellung von regenerierten Harzteilchen nach Anspruch 1, wobei das pulverisierte thermoplastische Harzprodukt, das regeneriert werden soll, ein thermoplastisches Harz, ausgewählt aus der Gruppe, bestehend aus Polyolefinen, Polyestern, Polystyrolen, ABS-Harzen und Polyamiden, umfasst.

9. Verfahren zur Herstellung von regenerierten Harzteilchen nach Anspruch 1, wobei das pulverisierte thermoplastische Harzprodukt, das regeneriert werden soll, ein Elastomeres enthält.

10. Regenerierte Harzteilchen, hergestellt durch das Verfahren nach Anspruch 1.

11. Regenerierte gefärbte Harzteilchen, hergestellt durch das Verfahren nach Anspruch 3.

12. Verfahren zur Herstellung eines Harzgegenstands, umfassend das Schmelzen von regenerierten Harzteilchen nach Anspruch 10 unter Erhitzen und das Verformen der geschmolzenen Teilchen.

13. Verfahren zur Herstellung eines Harzgegenstands, umfassend das Schmelzen von regenerierten gefärbten Harzteilchen nach Anspruch 11 unter Erhitzen und das Verformen der geschmolzenen Teilchen.

## Revendications

1. Procédé de production de particules de résine récupérée qui comprend les étapes de :
préparation d'un produit fondu qui comprend un mélange d'un pigment protégeant de la lumière et d'un produit de résine thermoplastique pulvérisé à récupérer qui contient 0,1 à 10% en poids d'une résine polymérisée et un pigment noir ou un pigment coloré ; et
conversion du produit fondu en particules solides.

2. Procédé de production de particules de résine récupérée selon la revendication 1, dans lequel l'étape de préparation d'un produit fondu comprend une étape de mélange du produit à récupérer avec le pigment protégeant de la lumière et une étape ultérieure de chauffage et de fusion du mélange résultant.

3. Procédé de production de particules de résine récupérée selon la revendication 1, dans lequel le pigment protégeant de la lumière utilisé dans l'étape de préparation d'un produit fondu comprend un pigment coloré seul, un mélange d'un pigment coloré et d'un pigment noir, un mélange d'un pigment coloré et d'un pigment blanc, ou un mélange d'un pigment coloré, d'un pigment noir et d'un pigment blanc, et le produit de résine thermoplastique pulvérisé à récupérer est constitué de particules de résine colorées.

4. Procédé de production de particules de résine récupérée selon la revendication 1, dans lequel une charge inorganique est incorporée dans le mélange produit dans l'étape de préparation d'un produit fondu.

5. Procédé de production de particules de résine récupérée selon la revendication 1, dans lequel une résine thermoplastique est incorporée dans le mélange produit dans l'étape de préparation d'un produit fondu.

6. Procédé de production de particules de résine récupérée selon la revendication 1, dans lequel une résine thermoplastique et un élastomère sont incorporés dans le mélange produit dans l'étape de préparation d'un produit fondu.

7. Procédé de production de particules de résine récupérée selon la revendication 1, dans lequel le produit de résine thermoplastique pulvérisé à récupérer est un pare-chocs ou une garniture intérieure pulvérisés portant un film de peau provenant d'une automobile.

8. Procédé de production de particules de résine récupérée selon la revendication 1, dans lequel le produit de résine thermoplastique pulvérisé à récupérer comprend une résine thermoplastique choisie dans le groupe consistant en polyoléfine, polyester, polystyrène, résine ABS et polyamide.

9. Procédé de production de particules de résine récupérée selon la revendication 1, dans lequel le produit de résine thermoplastique pulvérisé à récupérer contient un élastomère.

10. Particules de résine récupérée produites par le procédé selon la revendication 1.

11. Particules de résine colorée récupérée produites par le procédé selon la revendication 3.

12. Procédé de fabrication d'un article de résine préparé par fusion des particules de résine récupérée selon la revendication 10 par chauffage et moulage des particules fondues.

13. Procédé de fabrication d'un article de résine préparé par fusion des particules de résine colorée récupérée selon la revendication 11 par chauffage et moulage des particules fondues.
